# EUROPÄISCHE PATENTANMELDUNG

(11) **EP 4 742 507 A1**
(43) Veröffentlichungstag der Anmeldung: **13.05.2026**
(21) Anmeldenummer: 24211849.5
(22) Anmeldetag: 08.11.2024
(51) Int. Cl.: H02K 5/136, H02K 9/12, H02K 9/18, H02K 5/20

(54) **DYNAMOELEKTRISCHE MASCHINE MIT EINEM KÜHLSYSTEM**

(71) Anmelder: Innomotics GmbH, 90441 Nürnberg (DE)
(72) Erfinder: Krompasky, Erik, 25216 Nucice (CZ)
(74) Vertreter: Michalski Hüttermann & Partner Patentanwälte mbB

(57) **Zusammenfassung**

Die Erfindung betrifft eine dynamoelektrische Maschine (1) mit
einem Stator (2), der in einem Rahmengestell (26) angeordnet ist, dessen Rahmengestellöffnungen (27) zumindest auf einer Seite abschnittsweise schließbar sind,
einem Wicklungssystem, das in axial verlaufenden Nuten des Stators (2) angeordnet ist und an den Stirnseiten des Stators (2) Wickelköpfe (6) ausgebildet,
einem Rotor (11), der zu dem Stator (2) koaxial angeordnet und durch einen Luftspalt (8) von dem Stator (2) beabstandet ist, wobei der Rotor (11) über im Rahmengestell (26) angeordnete DE- und NDE-Lager drehbar gehalten ist,
einem Aufsatzkühler (18), der auf einer Seite des Rahmengestells (26) angeordnet ist und über Aufsatzkühleröffnungen (28) mit den Rahmengestellöffnungen (27) strömungstechnisch korrespondiert, derart, dass Kühlkreisläufe (22, 23) eines Kühlsystem einstellbar sind, das zumindest einen Primärkreislauf (22) und optional einen Sekundärkreislauf (23) jeweils mittels Leitelementen (29) bildet,
zumindest einer Lüfteranordnung (19,24) axial außerhalb eines Rahmengestells (26), die in axialer Verlängerung der Welle (9) und axial außerhalb des NDE-Lagers angeordnet ist.

## Beschreibung

Die Erfindung betrifft eine dynamoelektrische Maschine mit einem Kühlsystem.

Dynamoelektrische Maschine generieren während ihres Betriebes Verluste, die abgeführt werden müssen, um einen ordnungsgemäßen Betrieb der dynamoelektrischen Maschine gewährleisten zu können.

Um die Verluste abzuführen sind grundsätzlich verschiedene Kühlprinzipien mit unterschiedlichsten Kühlmedien im Einsatz, wie z.B. Gas, insbesondere Luft oder auch Flüssigkeiten, insbesondere Wasser.

Für die Kühlung dynamoelektrischen Maschinen werden dabei vor allem auf der Welle montierte (Eigenlüftung) oder externe Ventilatoren (Fremdlüftung) eingesetzt.

Langsam laufende dynamoelektrischen Maschinen werden in der Regel durch Lüfter mit vergleichsweise großem Durchmesser gekühlt, der sich im Inneren des Gehäuses der dynamoelektrischen Maschinen auf der DE- oder NDE-Seite befindet und mit der Welle direkt gekoppelt ist.

Bei geschlossenen dynamoelektrischen Maschinen liegt ein innerer geschlossener Kühlkreislauf vor (Primärkreislauf), bei dem insbesondere Luft oder ein anderes Kühlmedium umgewälzt wird. Eine Rückkühlung dieses Kühlmediums des Primärkreislaufes kann dabei in einem Wärmetauscher (Sekundärkreislauf) stattfinden.

Ausgehend davon liegt der Erfindung die Aufgabe zugrunde, ein effizientes Kühlsystem, insbesondere eine geschlossene dynamoelektrische Maschine bereitzustellen.

Die Lösung der gestellten Aufgabe gelingt durch die Merkmale des unabhängigen Anspruchs.

Vorteilhafte Ausgestaltungen sind den abhängigen Ansprüchen zu entnehmen.

Bei der erfindungsgemäßen dynamoelektrischen rotatorischen Maschine, die einen Stator aufweist, der in einem Rahmengestell angeordnet ist, können dessen Rahmengestellöffnungen zumindest auf einer Seite abschnittsweise schließbar sein. Auf den anderen Seiten sind in der Regel diese Öffnungen z.B. mittels Blechelementen verschlossen und bilden somit ein geschlossenes oder teilgeschlossenes Gehäuse.

Der Stator, der ein Blechpaket aufweist, ist mit einem Wicklungssystem versehen, das in axial verlaufenden Nuten des Blechpakets des Stators angeordnet ist und an den Stirnseiten des Stators Wickelköpfe ausgebildet. Diese Wickelköpfe sind durch Positionierung des Stators, vorzugsweise innerhalb des Rahmengestells in einem vorzugsweise eigenen strömungsmäßig vorteilhaft gestalteten Abschnitt des Rahmengestells angeordnet.

Ein Rotor, der zu dem Stator koaxial angeordnet und durch einen Luftspalt von dem Stator beabstandet ist, ist über im Rahmengestell angeordnete DE- und NDE-Lager drehbar gehalten. Der Rotor weist ein Blechpaket auf, das drehfest mit einer Welle verbunden ist. Der Rotor kann als Kurzschlussläufer oder auch mit Permanentmagneten versehener Läufer ausgelegt sein.

Die Blechpakete von Stator und/oder Rotor können jeweils axial und/oder radial verlaufende Kühlkanäle aufweisen.

Auf der Seite des Rahmengestells, auf der die offenen Rahmengestellöffnungen sind, ist ein Aufsatzkühler vorgesehen. Die Rahmengestellöffnungen korrespondieren mit den auf einer Seite des Aufsatzkühlers angeordneten Aufsatzkühleröffnungen derart, dass Kühlkreisläufe eines Kühlsystem der dynamoelektrischen Maschine einstellbar sind, wobei das Kühlsystem einen Primärkreislauf und einen Sekundärkreislauf bildet. Die Rahmengestellöffnungen und die Aufsatzkühleröffnungen sind einander zugewandt. Eine Lüfteranordnung ist axial außerhalb eines Rahmengestells, in axialer Verlängerung der Welle und axial außerhalb des NDE-Lagers angeordnet.

Bei einer dynamoelektrischen rotatorischen Maschine, wie einem Motor gibt es eine A-Seite (Drive-End; DE-Seite), deren eines Wellenende zu Abtriebselementen und/oder einer Arbeitsmaschine (allgemein Wellenanbauelementen) aufweist und mit diesen mechanisch direkt oder indirekt gekoppelt werden kann. Die B-Seite (Non-Drive-End; NDE-Seite) des Motors liegt am anderen axialen Wellenende und ist der DE-Seite abgewandt.

Als Primärkreislauf wird unabhängig von ein- oder zweiseitiger Belüftung (Z- oder X-Belüftung) innerhalb der dynamoelektrischen Maschine ein gasförmiger Kühlstrom, insbesondere ein Luftstrom bzw. eine Luftstromverteilung, bezeichnet, der Komponenten der Maschine, u.a. wie Stator, Kurzschlussringe von Rotor, magnetisch leitfähige Körper von Stator und/oder Rotor, (z.B. Blechpakete oder Teilblechpakete), Leiter, zumindest Gehäuseabschnitte, Lagerschilde und Lager anströmt und/oder umströmt und/oder durchströmt und als geschlossener Kreislauf (Innenkühlkreislauf) ausgeführt ist, der keinen strömungsmäßigen Kontakt nach außen hat.

Der Luftstrom des Primärkreislaufes wird durch einen oder mehrere Eigenlüfter und/oder Fremdlüfter drückend oder saugend außerhalb des Gehäuses der dynamoelektrischen Maschine generiert.

Als Sekundärkreislauf wird ein Kühlstrom, Flüssigkeitskühlstrom (z.B. auf der Basis von Wasser) oder ein gasförmiger Kühlstrom (z.B. auf der Basis von Luft) im Aufsatzkühler bezeichnet, der wärmetechnisch mit dem Kühlstrom des Primärkreislaufes gekoppelt ist, ihn also rückkühlen kann, wobei der Kühlstrom bzw. Kühlstromverteilung, insbesondere Luft des Sekundärkreislaufes durch Eigen- und/oder Fremdlüfter oder dementsprechende Pumpen drückend oder saugend generiert wird.

Vorzugsweise ist der Sekundärkreislauf offen ausgeführt, d.h. er wird mit Umgebungsluft betrieben, die aus der Umgebung angesaugt durch das Medium des Primärkreislaufs erwärmt und anschließend an die Umgebung wieder abgegeben wird. Damit kann eine dynamoelektrische Maschine mit einem derartigen Aufsatzkühler ausgestattet, an nahezu beliebigen Orten aufgestellt werden. Es sind ggf. vor den Sekundärkreislauf Filtermatten oder Luftfilter für stark verschmutzte Luft vorzusehen.

Dabei kann sich jeder Luftstrom sowohl des Primärkreislaufes als auch des Sekundärkreislaufes zumindest abschnittsweise innerhalb seines Strömungsverlaufs in parallele Strömungspfade aufteilen, insbesondere während des Wärmeaustausches zwischen Primärkreislauf und Sekundärkreislauf. Dies geschieht vorteilhafterweise durch Leitvorrichtungen in der dynamoelektrischen Maschine und/oder in einem als Aufsatzkühler ausgebildeten Sekundärkreislauf, um die Kühlwirkung der Strömung von Primärkreislauf und/oder Sekundärkreislauf zu optimieren.

Durch den nunmehr reduzierten axialen Abstand von DE- und NDE-Lager stellt sich eine kürzere Länge des Rahmengestells ein, wobei dieser vergleichsweise geringere Lagerabstand auch beim Bau der Fundamente der dynamoelektrischen Maschine von Vorteil sind.

Vorteilhaft ist außerdem der vereinfachte Zugang zu der nun außerhalb des Rahmengestells montierten Lüfteranordnung, z.B. für Wartungszwecke der Lüfteranordnung.

Die elektrischen Zuleitungen zum Wicklungssystem des Stators können nun einfach zur DE- oder NDE-Seite geführt werden.

Durch diese Anordnung der DE- und NDE-Lager kann somit je nach Kundenanforderung die axiale Bewegung des Rotors vergrößert werden.

Durch den mittels der erfindungsgemäßen Lüfteranordnung verbessert sich vor allem durch den nunmehr direkten Luftstrom die Kühlung an den Wickelköpfen an den Stirnseiten des Blechpakets des Stators. Dies ist insbesondere bei einer X-Belüftung, auf die später eingegangen wird von Vorteil.

Durch diese erfindungsgemäße Anordnung der DE- und NDE-Lager und damit auch einer Verlagerung des Lüftergewichts axial hinter das NDE-Lager stellt sich auch eine verringerte Rotorbiegung mit einer damit verbundenen verbesserten Rotordynamik ein. Die Rotordynamik wird auch dadurch verbessert, dass der axiale Lagerabstand nunmehr verkürzt werden kann.

Die DE-Seite und die dort angeflanschten Arbeitsmaschinen sind von Wartungsarbeiten etc. an der Lüfteranordnung auf der NDE-Seite nicht betroffen.

Mittels des erfindungsgemäßen Aufbaus sind sämtlich vorstellbare Kühlsysteme umsetzbar, wie z.B. IC81W, IC611 etc..

Der wesentliche Unterschied zu bekannten Lösungen liegt u.a. in der Konstruktion der Gehäuseeinheit, indem bei verkürztem axialen Lagerabstand mit unterschiedlichen Wärmetauschertypen im Sekundärkreislauf des Aufsatzkühlers und der Luftstromverteilung im Primärkreislauf innerhalb des Rahmengestells eine effiziente Kühlung der dynamoelektrischen rotatorischen Maschine geschaffen wird. Dies wird u.a. durch zusätzliche Leitelemente im Bereich der Wickelköpfe etc. unterstützt.

Die jeweilig erforderlichen Kühlgasströme (bei offenen (wie z.B. dem Sekundärkreislauf) und geschlossenen Kreisläufen (wie z.B. dem Primärkreislauf)) bzw. die Förderung der Kühlgasströme kann durch Eigenlüfter und/oder Fremdlüfter in der axial außerhalb des NDE-Lagers angeordneten Lüfteranordnung erfolgen.

Vorteilhaft ist es, wenn die Lüfteranordnung zwei Lüfter aufweist, insbesondere einen Lüfter für den Primärkreislauf und einen zweiten Lüfter für den Sekundärkreislauf auf einer Seite der Maschine, insbesondere der NDE-Seite.

Vorteilhafterweise weist die Lüfteranordnung der dynamoelektrischen Maschine zumindest ein Radiallüfter bzw. Radialgebläse auf. Radiallüfter sind in der Lage, den erforderlichen Druck und die erforderliche Luftmenge zur Kühlung dieser Maschine zu liefern. Bei der erfindungsgemä-βen Anordnung der Lüfteranordnung, insbesondere des Radiallüfters außerhalb des Rahmengestells, muss der Außendurchmesser des Radiallüfters nicht mehr derart begrenzt werden. Es lässt sich somit der Radiallüfter mit vergleichsweise großem Durchmesser und/oder vergleichsweise größerer Schaufelbreite ausführen, ohne den Lagerabstand (DE- zu NDE-Lager) oder die Rahmenlänge zu vergrößern.

Damit kann ein höherer Druck und/oder eine vergleichsweise größere Luftmenge für den Primärkreislauf aber auch den Sekundärkreislauf bereitgestellt werden, um so die Kühlleistung zu erhöhen.

Der außerhalb des Rahmengestells montierte Lüfter, Radiallüfter oder auch Axiallüfter ist in der Lage, die Luft des Primärkreislaufes über dementsprechend angeordnete Abdeckplatten und/oder Leitelemente an den Rahmengestellöffnungen und/oder den Aufsatzkühleröffnungen auf die DE- und NDE-Seite so zu verteilen, so dass nicht nur eine einseitige Belüftung der dynamoelektrischen Maschine, sondern auch eine zweiseitige Belüftung der dynamoelektrischen Maschine umsetzbar ist.

Bei einer zweiseitigen Belüftung der dynamoelektrischen Maschine kann der Querschnitt der Rotoreinlassfläche vergrößert und die Kühleffizienz gesteigert werden, da die Luft gleichzeitig von der DE- und NDE-Seite in den Rotor eintritt.

Durch die dementsprechend angeordneten Abdeckplatten an den Rahmengestellöffnungen und/oder den Aufsatzkühleröffnungen auf der sich zugewandten Seiten von Rahmengestell und Aufsatzkühler ist nicht nur eine einseitige Belüftung der dynamoelektrischen Maschine, sondern auch eine zweiseitige Belüftung der dynamoelektrischen Maschine realisierbar.

Dynamoelektrische Maschine nach einem der vorhergehenden Ansprüche, wobei Sekundärkühlsystem Plattenkühler oder Röhrenkühler ausgeführt ist. Dabei kann der Aufsatzkühler mit dementsprechenden Modulen ausgestattet sein. Der Sekundärkreislauf (also der Wärmetauscher des Primärkreislaufes), insbesondere der Aufsatzkühler der dynamoelektrischen rotatorischen Maschine ist als Röhrenkühler oder Plattenkühler ausgeführt, dessen Kühlmedium Luft oder Wasser ist. Derartige geschlossene Kühlkreisläufe sind am besten mit folgenden Aufsatzkühlern realisierbar: (Luft-Luft-Kühlaggregate via Röhren- oder Plattenkühler; oder Luft-Flüssigkeits-Kühlaggregate via Mantel- oder Aufsatzkühler). Verstellbare Leitvorrichtungen, wie Düsenelemente oder Blendelemente, führen und/oder verzweigen den Luftstrom von Primärkreislauf und/oder Sekundärkreislauf.

Der Innenkühlkreislauf bzw. Primärkreislauf der dynamoelektrischen rotatorischen Maschine kann je nach Kühlanforderungen als Z- oder X-Belüftung ausgelegt und einstellbar sein, was durch die Abdeckplatten an den Rahmengestellöffnungen und/oder den Aufsatzkühleröffnungen auf der sich zugewandten Seiten von Rahmengestell und Aufsatzkühler leicht möglich ist.

Über diese einstellbaren Aufsatzkühleröffnungen und/oder den dazu korrespondierenden einstellbaren Rahmengestellöffnungen können nunmehr X- oder Z-Belüftungen der dynamoelektrischen Maschinen ausgebildet werden. Diese Öffnungen können damit mittels angepassten Abdeckelementen abgeschottet bzw. geöffnet werden. Die jeweiligen Öffnungen korrespondieren somit strömungstechnisch, sodass sich ein X-Primärkreislauf oder ein Z-Primärkreislauf einstellen lässt.

Als einseitige Belüftung (Z-Belüftung) des Innenkühlkreislaufs wird die Belüftung der dynamoelektrischen Maschinen bezeichnet, bei der ein Luftstrom (Primärkreislauf) auf einer Seite der dynamoelektrischen Maschine in einen Wickelkopfraum des Rahmengestells eingespeist wird und danach über verschiedene parallele und/oder serielle Strömungskanäle - Wickelkopf, Rücken des Blechpakets des Stators, radiale Kühlkanäle, Luftspalt, etc. - zu dem anderen Wickelkopfraum gelangt. Von dort gelangt die erwärmte Luft des Primärkreislaufes über optional einen oder mehrere Lüfter - Eigenlüfter oder Fremdlüfter - über die korrespondierenden Öffnungen in den Aufsatzkühler zur Rückkühlung im Sekundärkreislauf.

Die Luft des Primärkreislaufes wird somit über einen Wickelkopfraum in das Gehäuse/Rahmengestell der dynamoelektrischen Maschine geführt und dort über den Wickelkopf und die Blechpakete und/oder den Luftspalt in den anderen Wickelkopfraum geführt. Von dort wird der nun erwärmte Kühlluftstrom über den Aufsatzkühler, mittels des Sekundärkreislaufes rückgekühlt.

Als zweiseitige Belüftung (X-Belüftung) des Innenkühlkreislaufs wird die Belüftung der dynamoelektrischen Maschine bezeichnet, bei der ein Luftstrom (Primärkreislauf) auf beiden Seiten der dynamoelektrischen Maschine in den Wickelkopfraum eingespeist wird und danach über verschiedene parallele und/oder serielle Strömungskanäle - u.a. Wickelkopf, Rücken des Blechpakets des Stators, axiale und/oder radiale Kühlkanäle, Luftspalt, etc. - im Wesentlichen mittig am Rücken des Statorblechpakets über die dementsprechenden korrespondierenden Öffnungen in den Aufsatzkühler gelangt. Die erwärmte Luft des Primärkreislaufes wird durch optional einen oder mehrere Lüfter - Eigenlüfter oder Fremdlüfter - in den Aufsatzkühler zur Rückkühlung gefördert. Dementsprechende, insbesondere stellbare Blendenelemente bzw. Leitelemente verbessern den Strömungsverlauf des Primärkreislaufes.

Die Lüfter der Lüfteranordnung, insbesondere für den Sekundär- und Primärkreislauf der dynamoelektrischen Maschine sind als Eigenlüfter und/oder Fremdlüfter ausgeführt, um auch beispielsweise für extreme klimatische Bedingungen und/oder langsamer Drehzahl eine ausreichende Kühlung zu schaffen.

Aufgrund des nunmehr möglichen größeren Durchmessers des Radial- oder Axiallüfters, insbesondere des als Eigenlüfters ausgeführten Radiallüfters kann eine dementsprechend hohe Luftmenge auch bei langsamer Drehzahl der dynamoelektrischen Maschine oder vergleichsweise hoher Polpaarzahl (4p oder 6p) garantiert werden. Vor allem bei der Realisierung zumindest eines Lüfters (für den Primärkreislauf oder Sekundärkreislauf) als Fremdlüfter ist auch bei höheren Polpaarzahlen und dementsprechend geringer Drehzahl auf jeden Fall eine ausreichende Kühlung der dynamoelektrischen Maschine gewährleistet.

Um eine ausreichende Kühlung der dynamoelektrischen Maschine auch auf der DE-Seite zu ermöglichen, verläuft innerhalb des Aufsatzkühlers zumindest ein Verteilkanal zur DE-Seite innerhalb Sekundärkühler/Aufsatzkühler, der insbesondere als Mittelkanal ausgebildet ist und der an der DE-Seite gegenüberliegende Öffnungen aufweist, die u.a. in den Wickelkopfraum auf der DE-Seite der dynamoelektrischen Maschine münden.

Über Abdeckplatten und/oder Luftleitelemente, insbesondere an den Aufsatzkühleröffnungen und Rahmengestellöffnungen ist eine X- oder Z- Belüftung der Primärkreislaufes einstellbar. Damit ist es über eine einfache Anpassung möglich das Kühlprinzip der dynamoelektrischen Maschine zu ändern.

Um den Luftdurchsatz, insbesondere des Primärkreislaufs - unabhängig von X- oder Z-Belüftung - zu erhöhen, wird die radiale Ausdehnung zumindest eines Radiallüfters, insbesondere des Radialeigenlüfters größer, als die radiale Ausdehnung des Rahmens der dynamoelektrischen Maschine gewählt.

Falls keine derartig hohen Luftdurchsätze zur Kühlung erforderlich sind, kann der Durchmesser des Lüfters auch geringer dimensioniert werden, um die Reibungsverluste des Lüfterrades zu reduzieren, damit erhöht sich der Wirkungsgrad der dynamoelektrischen Maschine.

Die Lüfteranordnung der dynamoelektrischen Maschine ist schalldämmt. Dadurch dass diese außerhalb des Rahmengestells angeordnet ist, lässt sich eine Geräuschdämpfung vergleichsweise einfach realisieren. Das Dämpfungsmaterial ist nur im Bereich der Lüfteranordnung vorzusehen. Bei Lüftern, die sich innerhalb eines Gehäuses der dynamoelektrischen Maschine befinden, ist dies schwierig oder gar unmöglich.

Die erfindungsgemäße Lüfteranordnung der dynamoelektrischen rotatorischen Maschine lässt sich bei vertikaler und horizontaler Aufstellung realisieren. Dabei kann die dynamoelektrische rotatorische Maschine als Motor oder Generator ausgeführt sein.

Dadurch dass die Lüfteranordnung auf der NDE-Seite axial außerhalb des NDE-Lagers ist, vereinfacht sich eine Demontage des Rotors aus dem Stator, insbesondere vor Ort auf einer Anlage.

Auch der Rotor wird durch den Primärkreislauf gekühlt, indem er mittels radialer und/oder auch axialer Luftströmungen gezielt an-, um-, oder durchströmt wird. Dabei seinen beispielhaft die Kurzschlussringe eines Rotors oder die Schenkelpole eines Schenkelpolläufers erwähnt.

Die Erfindung ist somit für alle Schutzarten einer dynamoelektrischen Maschine möglich, egal ob es sich um eine offene, direkt belüftete, eine völlig geschlossene Maschine oder eine rohrbelüftete Maschine und damit implizit auch um eine geschlossene Maschine handelt.

Als offene dynamoelektrische Maschine wird dabei eine Maschine verstanden, in die Umgebungsluft geführt wird, also Umgebungsluft mit den Aktivteilen (z.B. Stator, Wicklungssystem...) der Maschine direkt in Kontakt steht.

Als direkt belüftete dynamoelektrische Maschine wird dabei eine Maschine verstanden, bei der Umgebungsluft nicht in die Maschine dringt. Eine Rückkühlung der ggf. innerhalb der Maschine umwälzten Luft findet über Aufsatzkühler, z.B. Röhren- oder Plattenkühler oder lediglich über Konvektion statt.

Des Weiteren eignet sich die Erfindung auch für folgende Kühlarten von dynamoelektrischen Maschinen, u.a. auch für Maschinen in explosionsgeschützten Bereichen, wie z.B. des Bergbaus. Dabei sind dann sämtliche Komponenten der dynamoelektrischen Maschine, wie Gehäuse, Verrohrungen etc., darauf auszurichten, dass sich keine statische Aufladung im Betrieb ergibt.

Die erfindungsgemäßen Ausführungen und Konstruktion bzw. Lüfteranordnung der dynamoelektrischen Maschinen ist auch für folgende Kühlarten geeignet:

Diese Kühlarten sind im Einzelnen:

| Kühlart | |
|---|---|
| IC01 | Luftgekühlt, eigenbelüftet |
| IC81W | Luft/Wasser-Kühler, Innenkühlkreislauf eigenbelüftet |
| IC86W | Luft/Wasser-Kühler, Innenkühlkreislauf fremdbelüftet |
| IC611 | Luft/Luft-Kühler, Innenkühlkreislauf eigenbelüftet, Außenkühlkreislauf eigenbelüftet |
| IC616 | Luft/Luft-Kühler, Innenkühlkreislauf eigenbelüftet, Außenkühlkreislauf eigenbelüftet |
| IC666 | Luft/Luft-Kühler, Innenkühlkreislauf eigenbelüftet, Außenkühlkreislauf fremdbelüftet |
| TEWAC | Geschlossener Motor mit Luft/Wasser-Kühler |
| TEAAC | Geschlossener Motor mit Luft/Luft-Kühler |
| | |

Die erfindungsgemäßen Ausführungen und Konstruktion bzw. Lüfteranordnung sind somit auch ergänzend für dynamoelektrische Maschinen folgender Zündschutzarten geeignet:

| **Zündschutzart** | |
|---|---|
| Ex nA | Nichtfunkender Motor, Zone 2 |
| Ex px | Überdruckkapselung des Motors, erhöhte Sicherheit des Klemmenkastens, Zone 1 |
| Class 1, Div 2 | Nichtfunkender Motor |

Die Erfindung ist somit auch ergänzend für dynamoelektrische Maschinen geeignet, die als sogenannte Compact-Maschinen HVC mit folgenden Kühlarten und/oder Zündschutzarten ausgeführt sind:

| **Kühlart** | |
|---|---|
| IC411 | Rippen-luftgekühlt, eigenbelüftet |
| IC416 | Rippen-luftgekühlt, fremdbelüftet |
| IC71W | Wassermantelgekühlt |

| **Zündschutzart** | |
|---|---|
| Ex nA | Nichtfunkender Motor, Zone 2 |
| Ex pe | Überdruckkapselung des Motors, erhöhte Sicherheit des Klemmenkastens, Zone 1 |
| Ex e | Erhöhte Sicherheit des Motors, Zone 1 |

Diese dynamoelektrischen rotatorischen Maschine mit einem derartigen Kühlsystem und den damit verbunden Vorteilen wird vor allem in der industriellen Anwendung und im Bergbau bei Kompressoren, Verdichtern, Lüftern und Pumpen eingesetzt.

Die Erfindung sowie weitere vorteilhafte Ausgestaltungen der Erfindung werden anhand prinzipiell dargestellter Ausführungsbeispiele näher erläutert, darin zeigen:
- FIG 1: einen Teillängsschnitt einer dynamoelektrischen Maschine mit Lüfter,
- FIG 2: eine perspektivische Darstellung einer dynamoelektrischen Maschine mit Lüfter und Aufsatzkühler,
- FIG 3: ein Teillängsschnitt einer dynamoelektrischen Maschine mit Lüfter und Aufsatzkühler,
- FIG 4: einen Längsschnitt einer dynamoelektrischen Maschine mit Lüfter und Aufsatzkühler,
- FIG 5: einen perspektivischen Ausschnitt der DE-Seite einer dynamoelektrischen Maschine und Aufsatzkühler,
- FIG 6: einen Längsschnitt einer dynamoelektrischen Maschine mit zwei Lüfter und Aufsatzkühler,
- FIG 7: einen Teillängsschnitt einer dynamoelektrischen Maschine mit Lüfter,
- FIG 8: Detaildarstellung eines Wickelkopfes einer dynamoelektrischen Maschine,
- FIG 9 bis 11: Teillängsschnitte dynamoelektrischer Maschinen mit Lüfter und Aufsatzkühler mit Wasserkühler,
- FIG 12: Draufsicht auf einen Aufsatzkühler,
- FIG 13, 14: ein Teillängsschnitt einer dynamoelektrischen Maschine mit Lüfter und Aufsatzkühler mit Ausblasvorrichtung.

Es sei angemerkt, dass sich Begriffe wie "axial", "radial", "tangential" etc. auf die in der jeweiligen Figur bzw. im jeweils beschriebenen Beispiel zum Einsatz kommende Achse 10 beziehen. Mit anderen Worten beziehen sich die Richtungen axial, radial, tangential stets auf eine Achse 10 des Rotors 11 und damit auf die entsprechende Symmetrieachse des Stators 2. Dabei beschreibt "axial" eine Richtung parallel zur Achse 10, "radial" beschreibt eine Richtung orthogonal zur Achse 10, auf diese zu oder auch von ihr weg, und "tangential" ist eine Richtung, die in konstantem radialem Abstand zur Achse 10 und bei konstanter Axialposition kreisförmig um die Achse 10 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 11 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen aus dem allgemeinen Beschreibungsteil als auch der Figurenbeschreibung kombinierbar, ohne das Wesen der Erfindung zu verlassen.

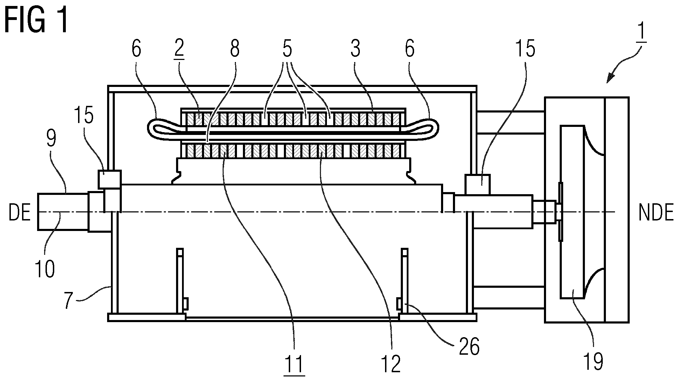

Figur 1 zeigt einer Teillängsschnitt einer dynamoelektrische Maschine 1, die in einem Rahmengestell 26 angeordnet ist. Das Rahmengestell 26 weist Rahmengestellöffnungen 27 auf. Die dynamoelektrische Maschine 1 weist einen Stator 2 auf, der aus axial geschichteten Blechen aufgebaut ist und so ein Blechpaket 3 des Stators 2 bildet. Durch einen Luftspalt 8 vom Stator 2 beabstandet, ist ein Rotor 11 koaxial und radial weiter innen angeordnet. In im Wesentlichen axial verlaufenden Nuten des Stators 2, die zu dem Luftspalt 8 weisen, ist ein Wicklungssystem angeordnet, das an den Stirnseiten des Blechpakets 3 des Stators 2 Wickelköpfe 6 ausbildet. Durch elektromagnetische Wechselwirkung des bestromten Wicklungssystems mit dem Rotor 11, wird der Rotor 11, der mit einer Welle 9 drehfest verbunden ist, um eine Achse 10 bewegt.

In axialer Verlängerung der Welle 9, die das Blechpaket 12 eines Rotors 11 trägt, sitzt axial außerhalb eines NDE-Lagers 15, also auf der NDE-Seite der dynamoelektrische Maschine 1 zumindest ein Lüfter 19, der insbesondere als Radiallüfter ausbildet ist. Dadurch dass der Lüfter 19 in diesem Ausführungsbeispiel nunmehr als Eigenlüfter und Radiallüfter ausgeführt ist, der sich axial außerhalb der Lageranordnung 15 der dynamoelektrischen Maschine 1 befindet, werden damit betriebsbedingte Schwingungen der Welle 9 vermieden.

Das Rahmengestell 26 mit seinen geschlossenen Rahmengestellöffnungen 27 kann auch als Gehäuse 7 betrachtet werden.

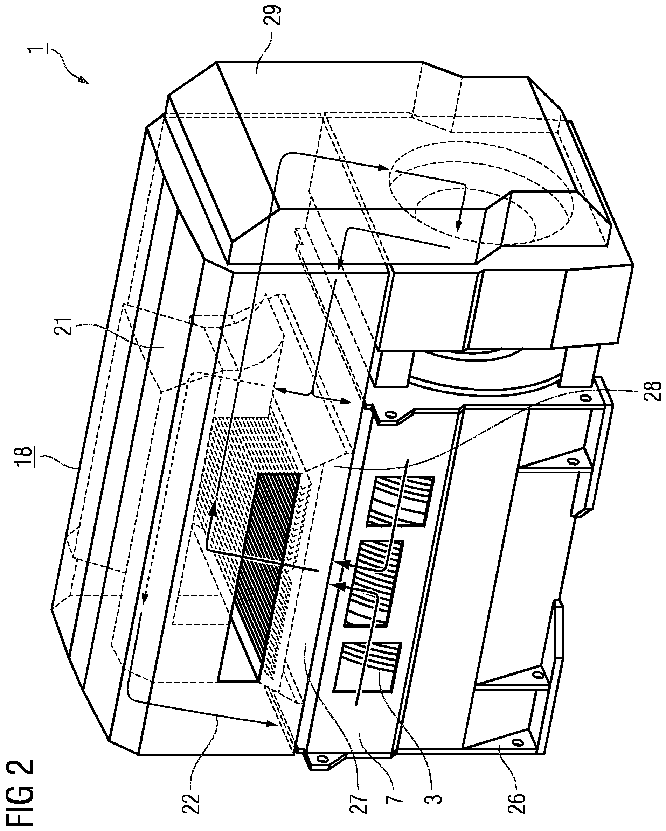

Figur 2 zeigt nunmehr die dynamoelektrische Maschine 1 in perspektivischer Darstellung mit einem Aufsatzkühler 18, der mittels korrespondierender Rahmengestellöffnungen 27 und Aufsatzkühleröffnungen 28 einen Primärkreislauf 22 und einen Sekundärkreislauf 23 realisiert. Dazu ist es erforderlich, dass die Rahmengestellöffnungen 27 und die Aufsatzkühleröffnungen 28 strömungstechnisch korrespondieren. Wie durch Pfeile dargestellt, verursacht der Lüfter 19 den für den Primärkreislauf 22 erforderlichen Kühlluftstrom.

Dabei wird der Primärkreislauf 22 ausgehend vom Lüfter 19 folgendermaßen gestaltet. Der Kühlluftstrom wird durch den Lüfter 19 über den Aufsatzkühler 18 und ggf. einer Bypassvorrichtung 21 in Abhängigkeit vom Kühlprinzip einer Z- oder X-Belüftung des Primärkreislaufes 22 über die jeweiligen geöffneten Rahmengestellöffnungen 27 der dynamoelektrischen Maschine 1 gegeben. Bei einer Z-Belüftung wird nunmehr Kühlluft auf der NDE-Seite in die Maschine gegeben und über die DE-Seite dem Aufsatzkühler 18 zugeführt, dort rückgekühlt und dem Lüfter 19 erneut zugeführt.

Bei einer X- Belüftung wird der vom Lüfter 19 erzeugte Kühlluftstrom sowohl auf der DE Seite als auch auf NDE-Seite in die Maschine 1 gegeben und über den dort jeweils vorhandenen Raum des Wickelkopfes 6 u.a. über axiale und/oder radiale Kühlkanäle 5 in die Blechpakete 3, 12 von Stator 2 und Rotor 11 geführt. Ein Austritt der erwärmten Luft erfolgt mittig, wie Figur 2 dargestellt und wird von dort aus durch den Sekundärkreislauf 23 wieder rückgekühlt und erneut dem Lüfter 19 zur Verfügung gestellt. Der Primärkreislauf 22 ist somit ein geschlossener Kreislauf.

Ein derartiger geschlossener Primärkreislauf 22 ist besonders für geschlossene dynamoelektrische Maschine 1 im Bergbau vorteilhaft, da dort je nach Einsatzort gewisse Anforderungen an Explosionsschutz gestellt werden.

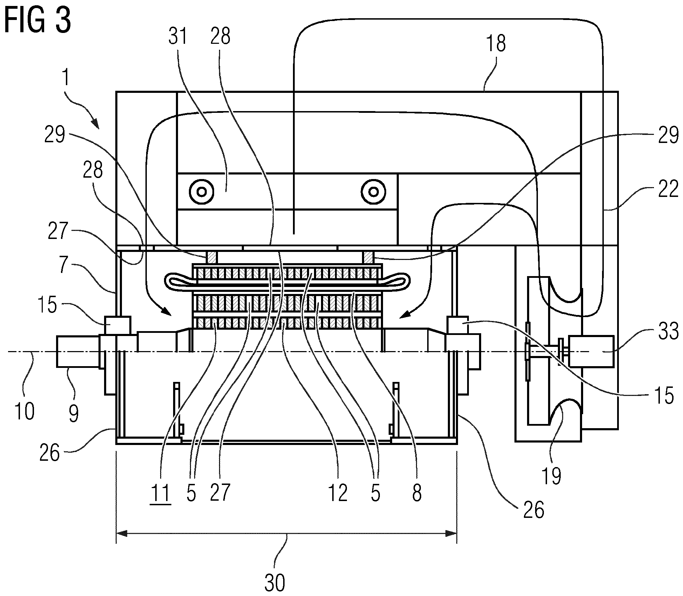

FIG 3 verdeutlicht in einem Teillängsschnitt nochmal das Prinzip der X-Belüftung. Dabei ist besonder's zu sehen, dass sich der axiale Abstand 30 zwischen dem DE-Lager und dem NDE-Lager verringern lässt, ohne Kühleinbußen zu erleiden. Dort ist als Sekundärkühler ein Wasserkühler 31 vorgesehen.

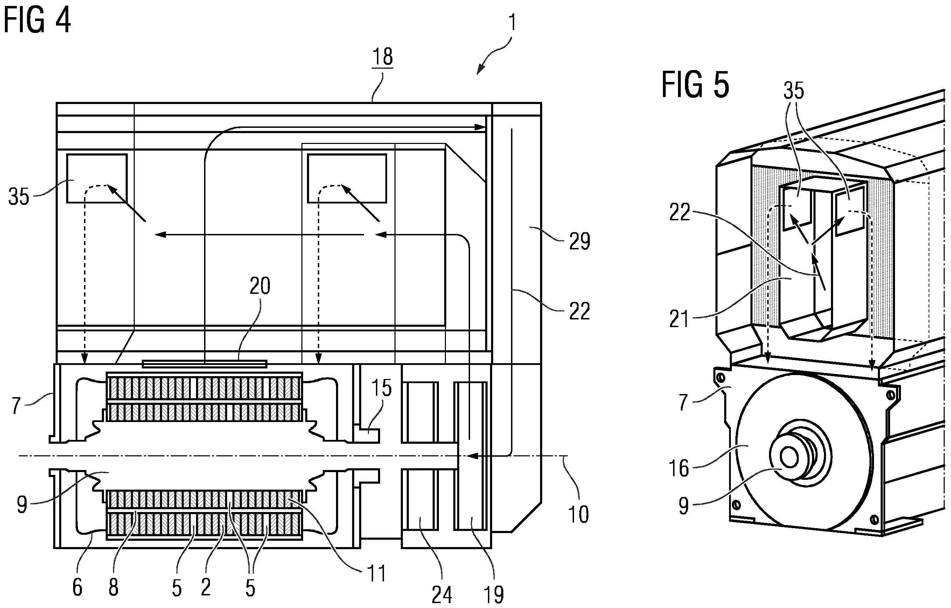

FIG 4 zeigt eine dynamoelektrische Maschine 1 mit Aufsatzkühler 18, bei der wiederum eine X-Belüftung realisiert wurde, wobei zwischen dem Lager 15 der NDE-Seite und dem Lüfter 19 ein weiterer Lüfter 24 vorgesehen ist, der den Sekundärkreislauf 23 mitgestaltet. Der Sekundärkreislauf 23 kann dabei als Röhrenkühler und oder Plattenkühler innerhalb des Aufsatzkühlers 18 ausgeführt sein. Es ist ebenso möglich, dass der Sekundärkreislauf 23 als Wasserkühler ausgeführt ist. So fern als Kühlmedium des Sekundärkreislauf 23 Luft vorgesehen ist, wird dieser als offener Kreislauf betrieben, d. h. es wird Umgebungsluft durch den Lüfter 24 angesaugt und über die Rohrbündelanordnung bzw. Plattenanordnung des Aufsatzkühlers 18 vorzugsweise auf der DE-Seite und/oder den Seiten wieder abgegeben.

FIG 5 zeigt in einer teilperspektivischen Darstellung die DE-Seite dynamoelektrischen Maschine 1, die im Wellenbereich einen Wellenflansch 16 aufweist und bei der der Aufsatzkühler 18 mit einer Bypassvorrichtung 21 die Kühlluft des vom Lüfter 19 auf der NDE-Seite geförderten Kühlmediums zur DE Seite der dynamoelektrischen Maschine 1 transportiert. An der DE-Seite der dynamoelektrischen Maschine 1 wird über DE-seitige-Öffnungen 35 dieser Bypassvorrichtung 21 Kühlluft in den Raum des Wickelkopfes 6 der DE-Seite der dynamoelektrischen Maschine 1 geführt.

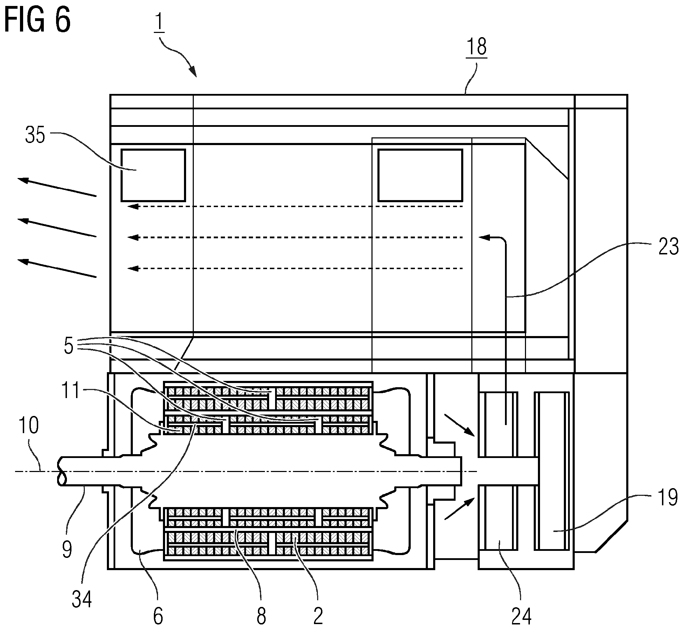

FIG 6 zeigt erneut eine dynamoelektrische Maschine 1 mit einem Aufsatzkühler 18 bei der jedoch nunmehr der prinzipielle Luftstrom des Sekundärkreislaufes 23 aufgezeigt ist. Dabei wird über den Lüfter 24 Umgebungsluft aus dem Zwischenbereich zwischen dynamoelektrischer Maschine 1 und der Lüfteranordnung gezogen und in ein Röhrensystem oder Plattenkühlersystem des Aufsatzkühlers 18 geführt, wobei damit der Primärkreislauf 22 rückgekühlt wird. Die erwärmte Luft des Sekundärkreislauf 23 wird nach außen geführt.

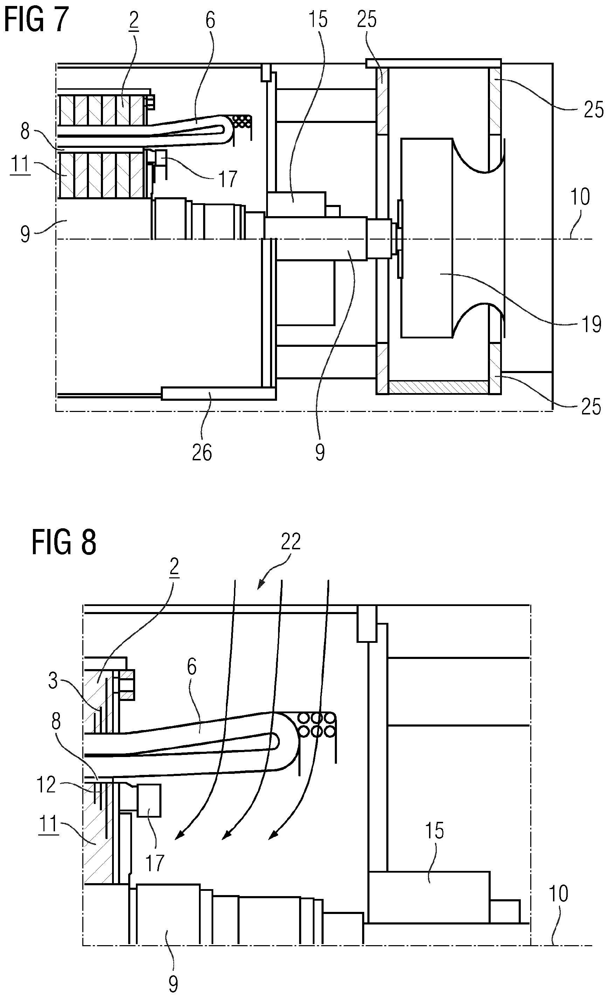

FIG 7 zeigt in einem Teillängsschnitt den Wickelkopf 6 an der NDE-Seite der dynamoelektrischen Maschine 1, als auch Teil des Rotors 11, der in diesem Fall als Kurzschlussläufer ausgeführt ist und an seinen Stirnseiten je einen Kurzschlussring 17 aufweist. Vorzugsweise kann der Raum, in dem der Lüfter 19 oder die Lüfter 19,24 nunmehr als Eigenlüfter oder auch als Fremdlüfter ausgeführt sind, relativ einfach durch das Material gedämmt werden.

FIG 8 zeigt in einer weiteren Detaildarstellung die Stirnseite des Stators 2 und des Rotors 11, wobei am Wickelkopf 6 teilweise noch weitere Leitungen geführt sind, die durch den Primärkreislauf 22 gegebenenfalls mit gekühlt werden können.

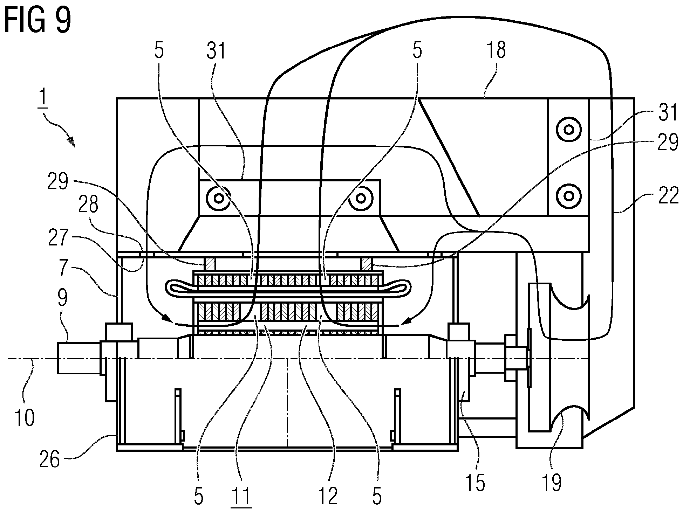

FIG 9 in einer weiteren Darstellung Stator 2 und des Rotor 11, wobei die Luftströmung des Primärkreislaufes 22 -erzeugt durch den Lüfter 19 - den Wickelkopf 6 kühlt und in im Wesentlichen axial und radiale verlaufende Kühlkanäle 5 des Rotorblechpakets 12 und/oder des Statorblechpakets 3 mündet. Diese axial verlaufenden Kühlkanäle münden in radial verlaufende Kühlkanäle 5, sodass die erwärmte Luft, die radial aus dem Stator 2 tritt, nach oben über korrespondierende Rahmengestellöffnungen 27 und Aufsatzkühleröffnungen 28 in den Aufsatzkühler 18 geführt wird. Dort wird die erwärmte Luft des Primärkreislaufes 22 durch den Sekundärkreislauf 23 rückgekühlt. Der Sekundärkreislauf 23 kann dabei als Luft-Luft-Wärmetauscher oder - wie in diesem Fall - als Luft-Wasser-Wärmetauscher 31 ausgeführt sein.

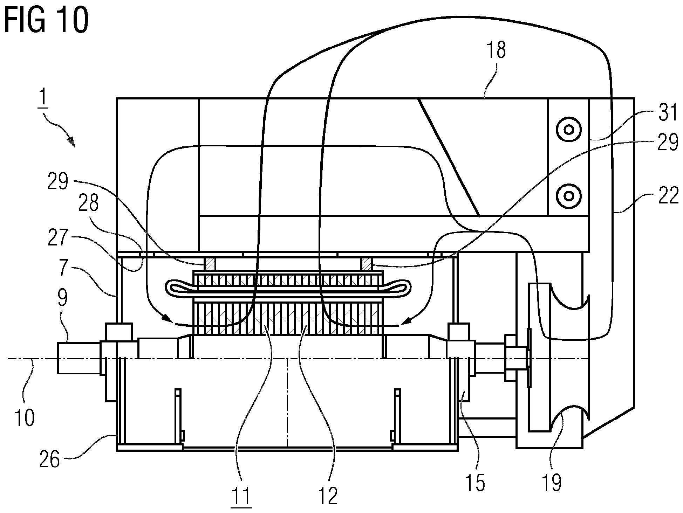

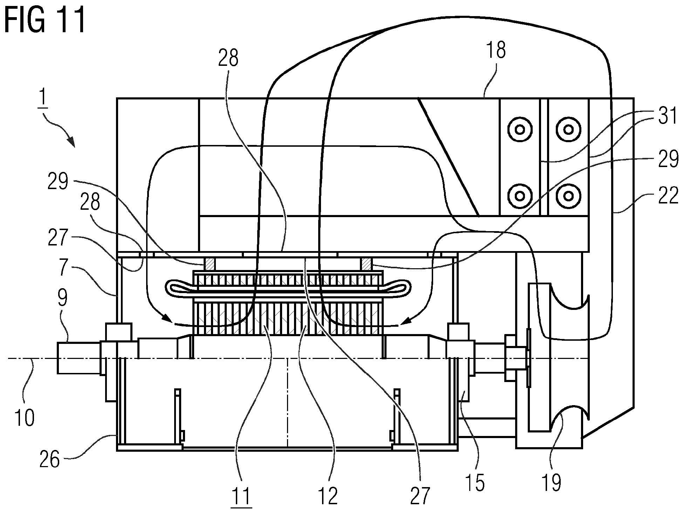

FIG 10 und 11 zeigen jeweils Teillängsschnitte dynamoelektrischer Maschinen 1 mit Lüfter und Aufsatzkühler 18 mit zumindest einem als Sekundärkreislauf 23 ausgebildeten Wasserkühler 31. Dabei ist der Lüfter 19 jeweils als Eigenlüfter ausgeführt, das heißt, dass er mit der Welle 9 drehfest verbunden ist.

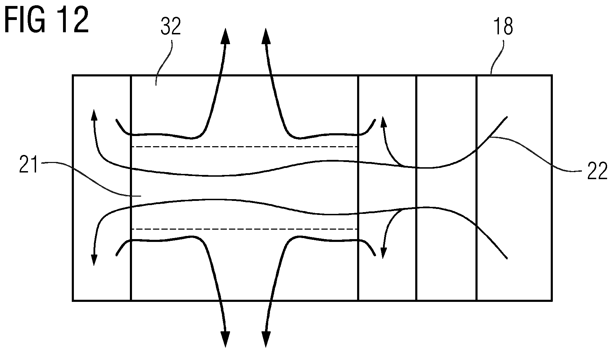

FIG 12 zeigt in Draufsicht eines Aufsatzkühlers 18 mit einer beispielhaften Luftverteilung eines offenen Primärkreislaufes 22, der die Außenluft über den Lüfter 19 in die Maschine 1 fördert und die dort erwärmte Luft zur Seite - im Wesentlichen senkrecht zur Achse 10 - über eine Ausblasvorrichtung 32 an die Umgebung abgibt.

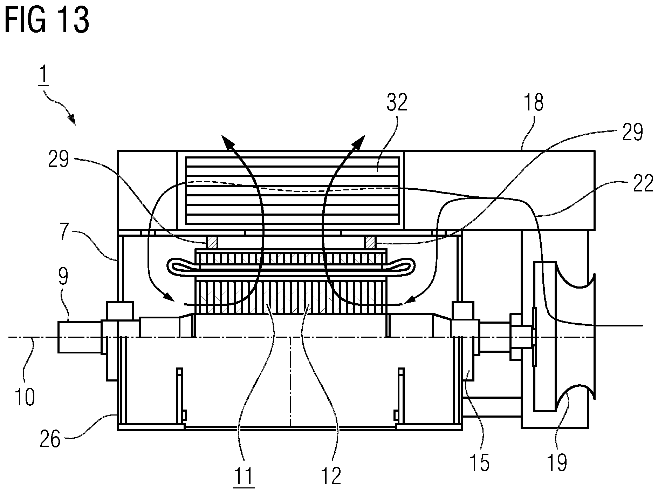

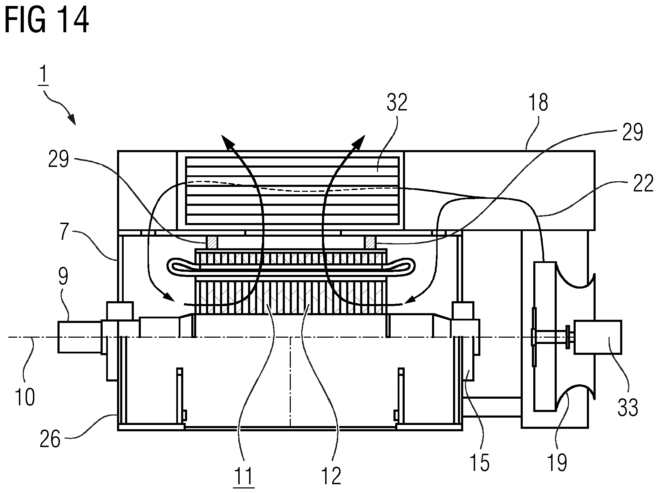

FIG 13, 14 zeigen einen Teillängsschnitt einer dynamoelektrischen Maschine 1 mit Lüfter 19 und Aufsatzkühler 18 mit Ausblasvorrichtung 32. Dabei wird die Außenluft gemäß FIG 13 durch einen Lüfter 19 gefördert, der als Eigenlüfter ausgeführt ist.

Gemäß FIG 14 ist der Lüfter 19 als Fremdlüfter ausgeführt, das heißt, er kann unabhängig von der Drehzahl der dynamoelektrischen Maschine 1, also unabhängig von der Drehzahl der Welle 9, eine vorgebbare Luftmenge in die Maschine 1 fördern.

Unabhängig der Ausgestaltung des Antriebs des Lüfters 19 liegt ein offener Primärkreislaufes 22 vor, der die Außenluft über den Lüfter 19 in die Maschine 1 fördert und die dort erwärmte Luft zur Seite - im Wesentlichen senkrecht zur Achse 10 - über eine Ausblasvorrichtung 32 an die Umgebung abgibt.

### Bezugszeichenliste

- 1: dynamoelektrische Maschine
- 2: Stator
- 3: Blechpaket Stator
- 4: Teilblechpakete Stator
- 5: radiale Kühlkanäle im Stator
- 6: Wickelkopf
- 7: Gehäuse
- 8: Luftspalt
- 9: Welle
- 10: Achse
- 11: Rotor
- 12: Blechpaket Rotor
- 13: Teilblechpakete Rotor
- 14: radiale Kühlkanäle Rotor
- 15: Lager
- 16: Wellenflansch
- 17: Kurzschlusskäfig
- 18: Aufsatzkühler
- 19: Lüfter, Primärkreislauf
- 20: Abdeckplatte für X- oder Z-Belüftung
- 21: Bypassvorrichtung
- 22: Primärkreislauf
- 23: Sekundärkreislauf
- 24: Lüfter, Sekundärkreislauf
- 25: Dämmmaterial
- 26: Rahmengestell
- 27: Rahmengestellöffnungen
- 28: Aufsatzkühleröffnungen
- 29: Leitelement
- 30: axialer Abstand
- 31: Wasserkühler
- 32: Ausblasvorrichtung
- 33: Antrieb Lüfter - Fremdlüfter
- 35: DE-seitige Öffnung

## Patentansprüche

1. Dynamoelektrische Maschine (1) mit
einem Stator (2), der in einem Rahmengestell (26) angeordnet ist, dessen Rahmengestellöffnungen (27) zumindest auf einer Seite abschnittsweise schließbar sind,
einem Wicklungssystem, das in axial verlaufenden Nuten des Stators (2) angeordnet ist und an den Stirnseiten des Stators (2) Wickelköpfe (6) ausgebildet,
einem Rotor (11), der zu dem Stator (2) koaxial angeordnet und durch einen Luftspalt (8) von dem Stator (2) beabstandet ist, wobei der Rotor (11) über im Rahmengestell (26) angeordnete DE- und NDE-Lager drehbar gehalten ist,
einem Aufsatzkühler (18), der auf einer Seite des Rahmengestells (26) angeordnet ist und über Aufsatzkühleröffnungen (28) mit den Rahmengestellöffnungen (27) strömungstechnisch korrespondiert, derart, dass Kühlkreisläufe (22, 23) eines Kühlsystem einstellbar sind, das zumindest einen Primärkreislauf (22) und optional einen Sekundärkreislauf (23) jeweils mittels Leitelementen (29) bildet,
zumindest einer Lüfteranordnung (19,24) axial außerhalb eines Rahmengestells (26), die in axialer Verlängerung der Welle (9) und axial außerhalb des NDE-Lagers angeordnet ist.

2. Dynamoelektrische Maschine (1) nach Anspruch 1, **dadurch gekennzeichnet, dass** die Lüfteranordnung zumindest einen Lüfter (19) aufweist.

3. Dynamoelektrische Maschine (1) nach Anspruch 1 oder 2, **dadurch gekenn**- **zeichnet** , dass der zumindest eine Lüfter (19) der Lüfteranordnung ein Radiallüfter ist.

4. Dynamoelektrische Maschine (1) nach einem der vorhergehenden Ansprüche, **dadurch gekennzeichnet, dass** das Sekundärkühlsystem (23) als Plattenkühler oder Röhrenkühler ausgeführt ist.

5. Dynamoelektrische Maschine (1) nach einem der vorhergehenden Ansprüche,
**dadurch gekennzeichnet, dass** der Primärkühlkreislauf (22) als X- oder Z-Belüftung ausgeführt ist.

6. Dynamoelektrische Maschine (1) nach einem der vorhergehenden Ansprüche,
**dadurch gekennzeichnet, dass** die Lüfter (19, 24) der Lüfteranordnung als Eigenlüfter und/oder Fremdlüfter ausgeführt sind.

7. Dynamoelektrische Maschine (1) nach einem der vorhergehenden Ansprüche,
**dadurch gekennzeichnet, dass** die dynamoelektrische Maschine (1) eine vergleichsweise große Polpaarzahl aufweist.

8. Dynamoelektrische Maschine (1) nach einem der vorhergehenden Ansprüche,
**dadurch gekennzeichnet, dass** innerhalb des Aufsatzkühlers (18) zumindest eine Bypassvorrichtung (21) als Verteilkanal zur DE-Seite innerhalb Sekundärkühlers (23) bzw. Aufsatzkühlers (18) verläuft, der insbesondere als Mittelkanal und/oder Seitenkanäle ausgebildet ist und der an der DE-Seite gegenüberliegende Bypassöffnungen (31) aufweist, die u.a. in den Raum des Wickelkopfes (6) auf der DE-Seite führen.

9. Dynamoelektrische Maschine (1) nach einem der vorhergehenden Ansprüche,
**dadurch gekennzeichnet, dass** über Abdeckplatten (20) und/oder Luftleitelemente (29), insbesondere an den Aufsatzkühleröffnungen (28) und/oder Rahmengestellöffnungen (27) eine X- oder Z- Belüftung der Primärkreislaufes (22) einstellbar ist.

10. Dynamoelektrische Maschine (1) nach einem der vorhergehenden Ansprüche,
**dadurch gekennzeichnet, dass** die radiale Ausdehnung zumindest eines Radiallüfters, insbesondere des Radialeigenlüfters größer ist als die radiale Ausdehnung des Rahmengestells (26).

11. Dynamoelektrische Maschine (1) nach einem der vorhergehenden Ansprüche,
**dadurch gekennzeichnet, dass** die Lüfteranordnung Schalldämmmaterial (25) aufweist.

12. Dynamoelektrische Maschine (1) nach einem der vorhergehenden Ansprüche,
**dadurch gekennzeichnet, dass** die dynamoelektrische Maschine (1) mit einem Rotor (11) aufweist, der als Kurzschlussläufer oder Schenkelpolläufer oder permanenterregter Läufer ausgestattet ist.

13. Verwendung einer Dynamoelektrische Maschine (1) nach einem der vorhergehenden Ansprüche in der industriellen Anwendung und im Bergbau bei Kompressoren, Verdichtern, Lüftern und Pumpen.
